# EUROPÄISCHE PATENTSCHRIFT

(11) **EP 2 715 114 B1**
(45) Veröffentlichungstag und Bekanntmachung des Hinweises auf die Patenterteilung: **18.10.2017**
(21) Anmeldenummer: 12724973.8
(22) Anmeldetag: 29.05.2012
(51) Int. Cl.: F03D 13/10

(54) **WINDENERGIEANLAGEN-ROTORBLATT UND VERFAHREN ZUR MONTAGE EINES WINDENERGIEANLAGEN-ROTORBLATTES**
WIND TURBINE ROTOR BLADE AND METHOD FOR INSTALLING A WIND TURBINE ROTOR BLADE
PALE D'ÉOLIENNES ET PROCÉDÉ DE MONTAGE D'UNE PALE D'ÉOLIENNES

(30) Priorität: 03.06.2011 DE 102011076937
(43) Veröffentlichungstag der Anmeldung: 09.04.2014
(73) Patentinhaber: Wobben Properties GmbH, 26607 Aurich (DE)
(72) Erfinder: HOFFMANN, Alexander, 26725 Emden (DE)
(74) Vertreter: Eisenführ Speiser
(86) Internationale Anmeldenummer: PCT/EP2012/060054
(87) Internationale Veröffentlichungsnummer: WO 2012/163918

(56) Entgegenhaltungen:
- WO-A1-03/100249
- WO-A1-2005/071261
- WO-A1-2007/033671
- DE-U1-202010 002 679

## Beschreibung

Die vorliegende Erfindung betrifft ein Windenergieanlagen-Rotorblatt und ein Verfahren zur Montage eines Windenergieanlagen-Rotorblattes.

Bei der Montage und Demontage von Rotorblättern sind verschiedene Techniken bekannt. Typischerweise wird das Rotorblatt mittels eines Krans montiert und demontiert. Hierzu werden Handhabungsmittel bzw. Slings im Rotorblattwurzel-nahen Bereich und im Rotorblattspitzen-Bereich vorgesehen. Diese Slings werden dann an einem Kranhaken befestigt, um das Rotorblatt befördern zu können. Alternativ dazu ist auch ein Verfahren zur Montage von Rotorblättern bekannt, wobei die Rotorblätter ein oder zwei Durchgangslöcher aufweisen, welche zur Aufnahme von Handhabungsmitteln dienen. Bei den bekannten Verfahren zur Montage und Demontage von Rotorblättern einer Windenergieanlage wird das Rotorblatt typischerweise vertikal ausgerichtet montiert oder demontiert.

DE 20 2010 002 679 U1 zeigt ein Rotorblatt einer Windenergieanlage mit einem Umlenkbogen zum Umlenken eines Seils zur Montage des Rotorblattes. DE 20 2010 002679 U1 offenbart dabei alle Merkmale des Oberbegriffs des Anspruchs 1. DE 103 05 543 A1 zeigt ein Rotorblatt einer Windenergieanlage mit einem Durchgangsloch zur Montage des Rotorblattes.

Es ist eine Aufgabe der vorliegenden Erfindung, ein Windenergieanlagen-Rotorblatt vorzusehen, welches eine verbesserte Montage und Demontage ermöglicht.

Diese Aufgabe wird durch ein Windenergieanlagen-Rotorblatt nach Anspruch 1 und durch ein Verfahren nach Anspruch 8 gelöst.

Somit wird ein Windenergieanlagen-Rotorblatt mit einer Rotorblattwurzel, einer Rotorblattspitze, einer Rotorblatt-Vorderkante, einer Rotorblatt-Hinterkante, einer Druckseite und einer Saugseite vorgesehen. Das Rotorblatt weist ferner eine Rotorblatt-Außenhülle mit mindestens einer Öffnung in der Druck- und/oder Saugseite zur Aufnahme von Handhabungsmitteln zur Montage oder Demontage des Rotorblattes auf. Das Rotorblatt weist ferner mindestens eine Befestigungseinheit zum Befestigen der durch die mindestens eine Öffnung eingeführten Handhabungsmittel auf. Die Befestigungseinheit ist im Inneren der Rotorblattaußenhülle zwischen Druckseite und Saugseite angeordnet.

Gemäß der vorliegenden Erfindung wird ein erstes Ende des eingeführten Handhabungsmittels an einem ersten Ende der Befestigungseinheit beispielsweise mittels eines Bolzens befestigt. Das erste Ende der Befestigungseinheit ist an der der Öffnung gegenüberliegenden Seite des Rotorblattes befestigt.

Gemäß einem Aspekt der vorliegenden Erfindung sind mindestens drei Öffnungen in der Rotorblatt-Außenhülle um den Bereich des Schwerpunktes des Rotorblattes vorgesehen.

Gemäß einem Aspekt der vorliegenden Erfindung stellen die Handhabungsmittel weiche Slings beispielsweise aus GFK oder CFK dar.

Gemäß einem weiteren Aspekt der vorliegenden Erfindung ist die Öffnung nach erfolgter Montage des Rotorblattes von innen verschließbar.

Gemäß einem weiteren Aspekt der vorliegenden Erfindung ist die Rotorblattaußenhülle im Bereich der mindestens einen Öffnung und der Befestigungseinheiten so groß ausgestaltet, dass ein Mann hindurch kriechen kann.

Gemäß einem weiteren Aspekt der vorliegenden Erfindung weist die Befestigungseinheit ein erstes und zweites Ende auf, wobei an dem ersten und zweiten Ende jeweils eine Verstärkungsplatte vorgesehen ist, welche von innen in bzw. an die Druckseite oder die Saugseite geklebt wird.

Gemäß einem weiteren Aspekt der vorliegenden Erfindung ist die Befestigungseinheit symmetrisch ausgestaltet und weist ein erstes und zweites Loch auf, welche dazu geeignet sind, einen Bolzen zur Befestigung eines Endes des Handhabungsmittels aufzunehmen.

Die Erfindung betrifft ebenfalls ein Verfahren zur Montage von Windenergieanlagen-Rotorblättern. Hierbei wird ein erstes Rotorblatt mittels eines Krans sowie eines Handhabungsmittels, beispielsweise drei Handhabungsmittel, welche erfindungsgemäß an der Befestigungseinheit innerhalb des Rotorblattes befestigt sind, zur Gondel der Windenergieanlage angehoben. Anschließend wird das Rotorblatt an der Gondel montiert und das Rotorblatt wird abgesenkt, wobei die drei Slings nach wie vor an dem Kranhaken befestigt sind. Im abgesenkten Zustand wird das Rotorblatt nach wie vor durch den Kran gehalten. Anschließend kann ein zweites Rotorblatt mittels eines zweiten Krans zur Gondel angehoben und dort montiert werden. Erst nachdem das zweite Rotorblatt komplett montiert worden ist, werden die Handhabungsmittel in dem ersten Rotorblatt entfernt.

Die Erfindung betrifft den Gedanken, insbesondere größere Rotorblätter nicht mehr vertikal ausgerichtet sondern horizontal ausgerichtet zu montieren bzw. zu demontieren. Dies ist vorteilhaft, weil damit die Windangriffsfläche reduziert wird. Ferner betrifft die Erfindung den Gedanken, die für die Montage der Rotorblätter benötigten Handhabungsmittel lösen zu können, ohne dass dabei ein Monteur das montierte Rotorblatt von außen begehen muss, was beispielsweise durch einen Mannkorb an einem Kran erfolgen kann. Vielmehr betrifft die Erfindung den Gedanken, die Handhabungsmittel so im Inneren des Rotorblattes zu befestigen, dass sie auch im Inneren des Rotorblattes wieder entfernt werden können. Dies kann beispielsweise durch einen Bolzen erfolgen, der nach erfolgter Montage des Rotorblattes entfernt werden kann. Anschließend können die Handhabungsmittel (beispielsweise Slings) durch die Öffnung entfernt werden. Hierzu muss keiner der Monteure an die Außenseite des Rotorblattes. Die Befestigungseinheit zum Befestigen der eingeführten Handhabungsmittel ist vorzugsweise so ausgestaltet, dass sie sich von der Druckseite zu der Saugseite des Rotorblattes erstreckt.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Draufsicht auf ein Windenergieanlagen-Rotorblatt gemäß einem ersten Ausführungsbeispiel,
- Fig. 2: zeigt eine schematische Schnittansicht des Windenergieanlagen-Rotorblattes gemäß dem ersten Ausführungsbeispiel,
- Fig. 3: zeigt eine weitere schematische Schnittansicht des Windenergieanlagen-Rotorblattes gemäß dem ersten Ausführungsbeispiel,
- Fig. 4: zeigt eine schematische Schnittansicht eines Rotorblattes gemäß dem Stand der Technik,
- Fig. 5: zeigt eine Draufsicht auf ein Windenergieanlagen-Rotorblatt gemäß dem zweiten Ausführungsbeispiel,
- Fig. 6: zeigt eine perspektivische Ansicht einer Befestigungseinheit und einer Handhabungseinheit gemäß dem zweiten Ausführungsbeispiel,
- Fig. 7: zeigt eine weitere perspektivische Ansicht von drei Befestigungseinheiten jeweils mit Slings gemäß dem zweiten Ausführungsbeispiel,
- Fig. 8: zeigt eine perspektivische Ansicht einer Befestigungseinheit für ein Rotorblatt gemäß dem zweiten Ausführungsbeispiel, und
- Fig. 9: zeigt eine perspektivische Ansicht einer Verstärkungsplatte für die Befestigungseinheit in dem Windenergieanlagen-Rotorblatt gemäß dem zweiten Ausführungsbeispiel.

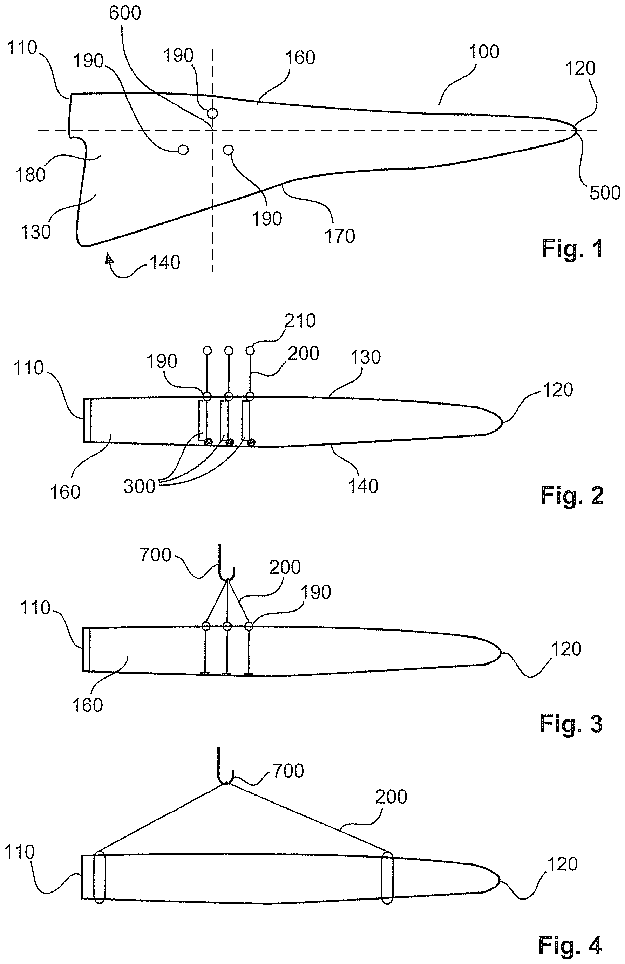

Fig. 1 zeigt eine schematische Draufsicht auf ein Windenergieanlagen-Rotorblatt gemäß einem ersten Ausführungsbeispiel. Das Windenergieanlagen-Rotorblatt 100 weist eine Rotorblattwurzel 110, eine Rotorblattspitze 120, eine Rotorblattvorderkante 160, eine Rotorblatthinterkante 170, eine Saugseite 130, eine Druckseite 140, eine Rotorblattaußenhülle 180 und Öffnungen 190 in der Saugseite 130 und/oder der Druckseite 140 auf. Optional können drei Öffnungen 190 vorgesehen sein.

Das Rotorblatt 100 weist eine Rotorblatt-Längsrichtung 500 auf. Die drei Öffnungen 190 können vorzugsweise im oder um den Bereich des Schwerpunktes 600 vorgesehen werden. Damit kann das Rotorblatt horizontal ausgerichtet montiert werden. Damit kann die Windangriffsfläche reduziert werden.

Fig. 2 zeigt eine schematische Schnittansicht des Windenergieanlagen-Rotorblattes gemäß dem ersten Ausführungsbeispiel. Das Rotorblatt 100 weist eine Rotorblattwurzel 110, eine Rotorblattspitze 120, eine Saugseite 130, eine Druckseite 140, eine Rotorblattvorderkante 160 sowie beispielsweise drei Öffnungen 190 in der Außenhülle 180 auf der Saugseite oder Druckseite auf, die im oder um den Bereich des Schwerpunktes 600 vorgesehen sind. Zusätzlich dazu können auch drei Öffnungen auf der Druckseite oder Saugseite vorhanden sein. Zwischen der Saugseite 130 und der Druckseite 140 sind beispielsweise drei Befestigungseinheiten 300 vorgesehen. Durch die Öffnungen 190 können Handhabungsmittel beispielsweise in Form von Slings 200 in das Innere des Rotorblattes eingeführt werden und mittels der Befestigungseinheiten 300 befestigt werden.

Die Handhabungsmittel 200 weisen an ihren freien Enden eine Öse 210 auf, welche über einen Kranhaken 700 gestülpt werden können (s. Fig. 3), damit das Rotorblatt montiert oder demontiert werden kann.

Fig. 4 zeigt eine schematische Schnittansicht eines Rotorblattes gemäß dem Stand der Technik. Das Rotorblatt weist eine Rotorblattwurzel 110 und eine Rotorblattspitze 120 auf. Die Handhabungsmittel beispielsweise in Form von Slings 200 können um das Rotorblatt herum geschlungen werden und dann an dem Kranhaken 700 befestigt werden.

Aus dem Vergleich zwischen den Rotorblättern in Fig. 3 und Fig. 4 ist sofort zu sehen, dass das erfindungsgemäße Rotorblatt Handhabungsmittel beispielsweise in Form von Slings 200 aufweisen kann, welche wesentlich kürzer sind als bei dem Rotorblatt gemäß dem Stand der Technik von Fig. 4. Dies hat auch zur Folge, dass der für die Montage bzw. Demontage benötigte Kran kleiner sein kann.

Gemäß der Erfindung wird das zu befestigende Ende der Handhabungsmittel bzw. Slings 200 auf der den Öffnungen 190 gegenüberliegenden Seite des Rotorblattes befestigt. Dies ist insbesondere vorteilhaft hinsichtlich einer besseren Lastverteilung bei der Montage und Demontage des Rotorblattes.

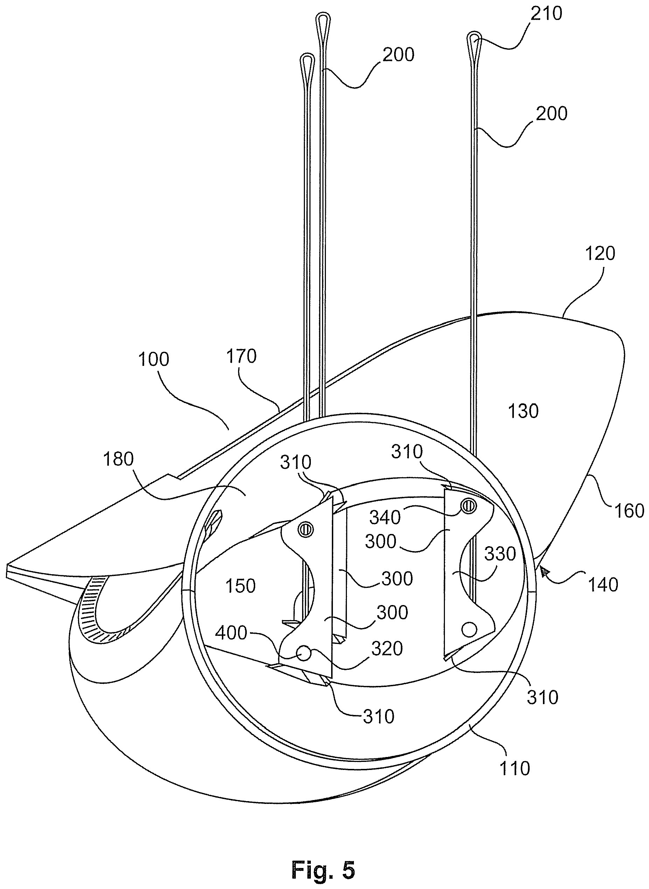

Fig. 5 zeigt eine Draufsicht auf ein Windenergieanlagen-Rotorblatt gemäß einem zweiten Ausführungsbeispiel. Insbesondere stellt die Draufsicht von Fig. 5 eine Ansicht auf den Rotorblattwurzel-Bereich des Rotorblattes dar. Das Rotorblatt weist eine Rotorblattwurzel 110, eine Rotorblattspitze 120, eine Rotorblattvorderkante 160, eine Rotorblatthinterkante 170, eine Saugseite 130, eine Druckseite 140 sowie eine Außenhülle 180 auf. Das Rotorblatt ist in seinem Inneren 150 zumindest teilweise hohl ausgestaltet, so dass Befestigungseinheiten 300 zwischen der Saugseite 130 und der Druckseite 140 an der Außenhülle 180 befestigt werden können. Ferner sind auf der Druckseite 140 drei Öffnungen 190 vorgesehen, durch welche die Slings 200 in das Innere 150 des Rotorblattes eingeführt werden können. Die Slings werden dann mittels eines Bolzens 400 an einer Befestigungseinheit 300 befestigt.

Die Befestigungseinheit 300 weist zwei Verstärkungsplatten 310 an ihren beiden Enden auf. Mittels der Verstärkungsplatten 310 wird die Befestigungseinheit an der Außenhaut 180 befestigt. Die Befestigungseinheiten 300 weisen eine erste und zweite Öffnung 320, 340 auf. In dem in Fig. 5 gezeigten Fall wird ein Bolzen in das erste Loch 320 eingeführt, um die Slings 200 lösbar zu befestigen. Damit wird die Last- bzw. Kraftverteilung in die nach unten zeigende Seite (in Fig. 5 die Saugseite 130) eingeleitet bzw. vorgesehen.

Die Befestigungseinheit 300 weist in ihrem mittleren Bereich eine Ausbuchtung 330 auf.

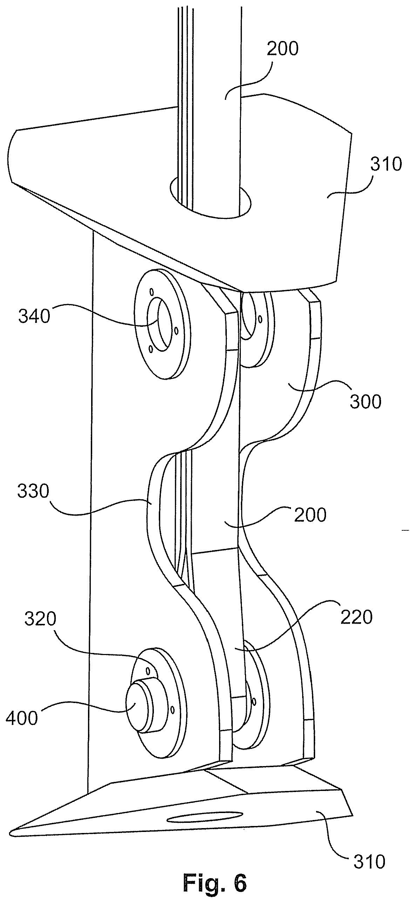

Fig. 6 zeigt eine perspektivische Ansicht der Befestigungseinheit für ein Rotorblatt gemäß dem zweiten Ausführungsbeispiel. Die Befestigungseinheit weist zwei Verstärkungsplatten 310, eine erste und zweite Öffnung 320, 340 sowie im mittleren Bereich eine Ausbuchtung 330 auf. Der Sling 200 weist ein erste Öse 210 zur Aufnahme eines Kranhakens und eine zweite Öse 220 auf, welche zur Befestigung an der Befestigungseinheit dient. Dies erfolgt durch Einfügen des Bolzens 400 in die erste Öffnung 320.

Im mittleren Bereich der Befestigungseinheit zwischen der ersten und zweiten Öffnung ist eine Ausbuchtung vorgesehen.

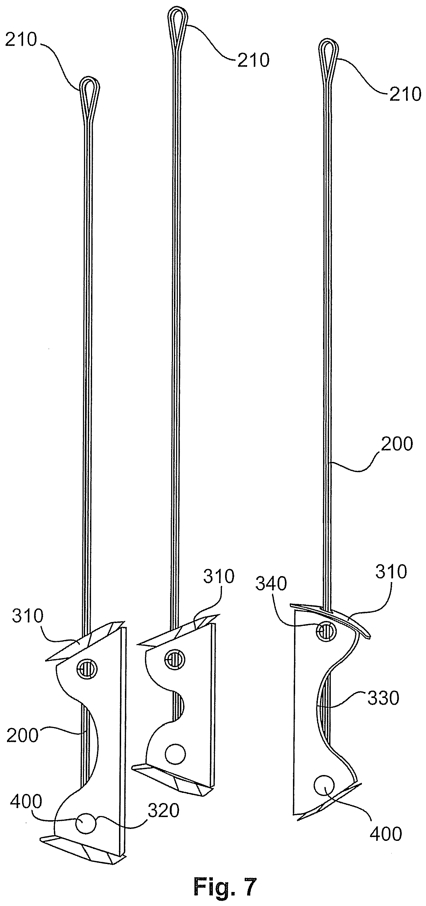

Fig. 7 zeigt eine weitere perspektivische Ansicht der Befestigungseinheiten 300 und der Slings 200 eines Windenergieanlagen-Rotorblattes gemäß dem zweiten Ausführungsbeispiel. Die Befestigungseinheiten weisen jeweils zwei Verstärkungsplatten 310, ein erstes und zweites Loch 340 sowie eine Ausbuchtung 330 im mittleren Abschnitt auf. Die Slings 200 werden durch ein Loch in der Verstärkungsplatte 310 eingeführt und mittels eines Bolzens 400 an bzw. in dem ersten Loch 320 befestigt.

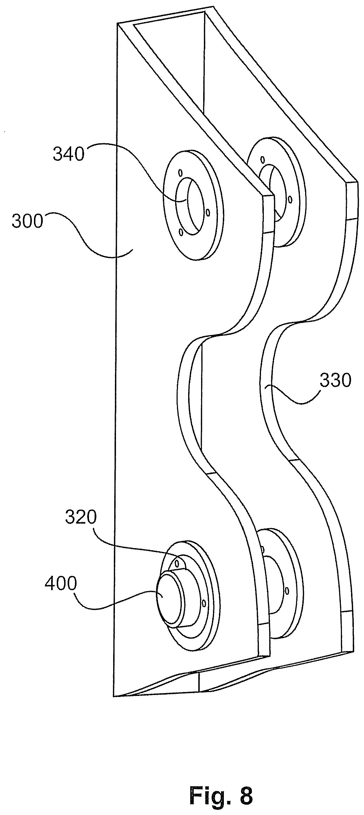

Fig. 8 zeigt eine perspektivische Ansicht einer Befestigungseinheit für ein Rotorblatt gemäß dem zweiten Ausführungsbeispiel. Die Befestigungseinheit 300 ist im Querschnitt beispielsweise U-förmig ausgestaltet und weist somit zwei erste Löcher 320, zwei zweite Löcher 340 sowie zwei Ausbuchtungen 330 im mittleren Abschnitt zwischen den ersten und zweiten Löchern auf. Ein Bolzen 400 kann durch die beiden ersten Löcher 320 geführt werden. Dies kann zur Befestigung der zweiten Öse des Slings 200 dienen.

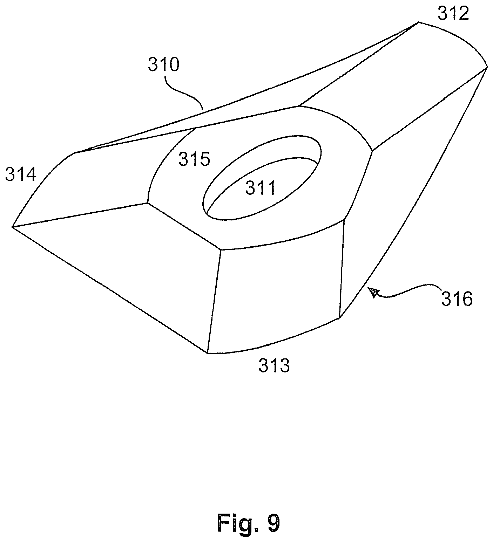

Fig. 9 zeigt eine perspektivische Ansicht einer Verstärkungsplatte einer Befestigungseinheit für ein Rotorblatt gemäß dem zweiten Ausführungsbeispiel. Die Befestigungsplatte weist in ihrer Mitte ein Durchgangsloch 311 zur Aufnahme der Handhabungsmittel beispielsweise in Form von Slings auf. Ferner weist die Verstärkungsplatte eine erste Seite 315 und eine zweite Seite 316 auf. Ferner weist die Verstärkungsplatte drei Enden 312, 313, 314 auf. Die Verstärkungsplatte 310 wird beispielsweise bei der Herstellung des Rotorblattes in bzw. an die Außenhülle geklebt.

Gemäß dem zweiten Ausführungsbeispiel wird der Sling 200 mittels eines Bolzens 400 in bzw. an der ersten Öffnung 320 befestigt. Dies ist insbesondere vorteilhaft, weil dadurch ein besserer Kraftfluss ermöglicht wird. Die zweite Öffnung 320 stellt dabei die Öffnung dar, welche nach unten zeigt und der Öffnung 190 gegenüberliegt. Die Ausnehmung 330 dient der Gewichtsreduktion. Ferner kann dadurch verhindert werden, dass ein Luftstrom durch das Innere 150 des Rotorblattes behindert wird. Dieser Luftstrom kann beispielsweise zum Heizen des Rotorblattes verwendet werden. Ferner kann durch die Ausnehmung erreicht werden, dass ein Monteur beispielsweise zur Montage oder Demontage in das Innere des Rotorblattes hineinkriechen kann.

Vorzugsweise ist das Innere des Rotorblattes im Bereich der Löcher 190 so groß ausgestaltet, dass ein Mann dort hindurch kriechen kann, um die Bolzen 400 nach erfolgter Montage des Rotorblattes zu lösen. Ferner ist dieser Bereich derart groß ausgestaltet, dass ein Mann hindurch kriechen kann, um das Innere des Rotorblattes inspizieren zu können.

Optional ist die Befestigungseinheit 300 aus einem nicht metallischen Material wie beispielsweise GFK oder CFK hergestellt. Lediglich der Bolzen 400 kann aus Metall hergestellt sein.

Die Handhabungsmittel bzw. Slings gemäß der Erfindung sind vorzugsweise aus Glasfaser hergestellt und sind weich, damit sie das Rotorblatt nicht beschädigen. Im Bereich der Öffnung 190 kann eine biegsame elastische Hülse vorgesehen sein, damit die Slings die Außenhaut des Rotorblattes im Bereich der Öffnung 190 nicht beschädigen. Nach der Montage des Rotorblattes und dem Entfernen der Handhabungsmittel kann die Öffnung 190 optional von innen heraus mittels eines Stopfens abgedichtet werden. Optional kann eine Dichtung um den Stopfen herum vorgesehen sein.

Gemäß einem Aspekt der vorliegenden Erfindung kann im Bereich der Öffnung 190 ein beispielsweise mehrteiliger Trichter vorgesehen sein, welcher von innen nach außen montiert wird. Anschließend werden die Slings durch die Öffnung 190 eingeführt und an der Befestigungseinheit 300 befestig. Nach der Montage kann der mehrteilige Trichter dann von innen demontiert werden.

Gemäß einem Aspekt der vorliegenden Erfindung sind beispielsweise drei Öffnungen 190 um den Schwerpunkt 600 des Rotorblattes herum angeordnet. Unter den Löchern 190 sind drei Befestigungseinheiten zwischen der Saugseite 130 und der Druckseite 140 vorgesehen.

Bei der Montage des Rotorblattes wird das erste Rotorblatt mittels eines ersten Krans beispielsweise in einer 3-Uhr-Position montiert. Hierzu sind die drei Ösen 210 der Slings an einem Kranhaken 700 angehängt, so dass der Kran das Rotorblatt in der 3-Uhr-Position zur Montage hält. Nach erfolgter Montage wird das Rotorblatt abgesenkt. Hierbei kann es vorkommen, dass lediglich einer der Slings gespannt ist, während die anderen beiden Slings nicht gespannt sind. Dies kann dazu führen, dass die Öffnung 190 sowie die Befestigungseinheit 300, an welcher der Sling befestigt ist, den gesamten Kraftfluss für das Rotorblatt aufnehmen muss. Somit müssen die Öffnungen 190 sowie die Verstärkungsplatten 310 entsprechend ausgelegt sein.

Bei der Montage des Rotorblattes ist es vorteilhaft, die Slings 200 erst nach erfolgter Montage des zweiten Rotorblattes zu entfernen. Hierzu wird das Rotorblatt soweit gedreht ist, dass das nächste Rotorblatt beispielsweise in der 9-Uhr-Position mittels eines zweiten Krans montiert werden kann. Somit kann gewährleistet werden, dass das Rotorblatt beim Drehen nach unten sich nicht unkontrolliert bewegt und überschwingt.

Gemäß einem Aspekt der vorliegenden Erfindung kann anstatt von zwei Slings ein durchgängiger Sling verwendet werden, dessen eines Ende an einer ersten Befestigungseinheit und dessen zweites Ende an einer zweiten Befestigungseinheit befestigt wird.

Gemäß einem weiteren Aspekt der vorliegenden Erfindung sind entlang der Längsrichtung des Rotorblattes Gurte zur Aufnahme der jeweiligen Kräfte vorgesehen. Verstärkungsplatten 310 werden vorzugsweise mit diesen Gurten verbunden, um einen guten Kraftfluss zu ermöglichen.

Die Verstärkungsplatten weisen drei Enden 312, 313, 314 auf, welche sich zueinander in einem Winkel von 60° befinden. Dies ist insbesondere vorteilhaft im Hinblick auf den Kraftfluss.

## Patentansprüche

1. Windenergieanlagen-Rotorblatt (100), mit
einer Rotorblattwurzel (110), einer Rotorblattspitze (120), einer Rotorblatt-Vorderkante (160) und einer Rotorblatt-Hinterkante (170) sowie einer Druckseite (140) und einer Saugseite (130),
einer Rotorblatt-Außenhülle (180) mit mindestens einer Öffnung (190) in der Druck- und/oder Saugseite zur Aufnahme von Handhabungsmitteln (200) zur Montage oder Demontage des Rotorblattes (100), und
mindestens einer Befestigungseinheit (300) zum Befestigen der durch die mindestens eine Öffnung eingeführten Handhabungsmittel (200), wobei die Befestigungseinheit (300) im Inneren (150) der Rotorblatt-Außenhülle (100) zwischen der Druckseite (140) und der Saugseite (130) angeordnet ist,
wobei ein erstes Ende (220) des eingeführten Handhabungsmittels (200) an einem ersten Ende (320) der Befestigungseinheit (300) befestigt ist, wobei das erste Ende (320) der Befestigungseinheit (300) an der der Öffnung (190) gegenüberliegenden Seite des Rotorblattes (100) befestigt ist.

2. Rotorblatt nach Anspruch 1, wobei
drei Öffnungen (190) in der Rotorblatt-Außenhülle (180) um den Bereich des Schwerpunktes (600) des Rotorblattes vorgesehen sind.

3. Rotorblatt nach Anspruch 1 oder 2, wobei
die Handhabungsmittel (200) weiche Slings aus GFK oder CFK darstellen.

4. Rotorblatt nach einem der Ansprüche 1 bis 3, wobei
die Öffnung (190) nach erfolgter Montage des Rotorblattes von innen verschließbar ist.

5. Rotorblatt nach einem der Ansprüche 1 bis 4, wobei
die Rotorblatt-Außenhülle (180) im Bereich der mindestens einen Öffnung (190) und der Befestigungseinheiten (300) so groß ausgestaltet ist, dass ein Mann hindurch kriechen kann.

6. Rotorblatt nach einem der Ansprüche 1 bis 5, wobei
die Befestigungseinheit (300) ein erstes und zweites Ende aufweist, wobei an dem ersten Ende und zweiten Ende jeweils eine Verstärkungsplatte (310) vorgesehen ist, welche von innen bzw. an die Druckseite oder die Saugseite geklebt wird.

7. Rotorblatt nach Anspruch 6, wobei
die Befestigungseinheit (300) symmetrisch ausgestaltet ist und ein erstes und zweites Loch (320, 340) aufweist, welche dazu geeignet sind, einen Bolzen (400) zur Befestigung eines Endes der Handhabungsmittel aufzunehmen.

8. Verfahren zur Montage von Windenergieanlagen-Rotorblättern, wobei jedes Rotorblatt eine Rotorblatt-Außenhülle (180) mit mindestens einer Öffnung (190) zur Aufnahme von Handhabungsmitteln (200) zur Montage oder Demontage des Rotorblattes (100) aufweist, wobei mindestens eine Befestigungseinheit (300) zum Befestigen der durch die mindestens eine Öffnung eingeführten Handhabungsmittel (200) vorgesehen ist, wobei die Befestigungseinheit im Inneren der Rotorblatt-Außenhülle vorgesehen ist, mit den Schritten:
Befestigen mindestens eines ersten Endes (220) eines ersten Handhabungsmittels (200) an einem ersten Ende (320) einer Befestigungseinheit (300) eines Windenergieanlagen-Rotorblattes (100) an der der Öffnung (190) gegenüberliegenden Seite des Windenergieanlagen-Rotorblatts (100), wobei das erste Handhabungsmittel (200) durch die Öffnung (190) eingeführt wird,
Anheben des Rotorblattes mittels des ersten Handhabungsmittels (200) und eines ersten Kranes,
Montieren des Rotorblattes (100) an einem ersten Rotorblattanschluss in einer Gondel einer Windenergieanlage,
Absenken des ersten montierten Rotorblattes (100) mittels des ersten Kranes und der ersten befestigten Handhabungsmittel (200),
Halten des Rotorblattes (100) in der abgesenkten Position mittels des ersten Handhabungsmittels (200) und des ersten Kranes,
Befestigen von zweiten Handhabungsmitteln an einer Befestigungseinheit (300) eines zweiten Windenergieanlagen-Rotorblattes (100), wobei das zweite Handhabungsmittel (200) durch die Öffnung (190) eingeführt wird,
Anheben des zweiten Rotorblattes (100) mittels der zweiten Handhabungsmittel (200) und eines zweiten Kranes,
Montieren des zweiten Rotorblattes (100) an einem zweiten Rotorblattanschluss an einer Gondel der Windenergieanlage,
wobei das erste Rotorblatt durch die ersten Handhabungsmittel und den ersten Kran bis zur Montage des zweiten Rotorblattes gehalten wird.

## Claims

1. Wind turbine rotor blade (100) having
a rotor blade root (110), a rotor blade tip (120), a rotor blade front edge (160) and a rotor blade rear edge (170) and a pressure side (140) and an intake side (130),
a rotor blade outer shell (180) having at least one opening (190) in the pressure side and/or intake side for receiving handling means (200) for assembly or disassembly of the rotor blade (100), and
at least one securing unit (300) for securing the handling means (200) which is introduced through the at least one opening, wherein the securing unit (300) is arranged at the inner side (150) of the rotor blade outer shell (100) between the pressure side (140) and the intake side (130),
wherein a first end (220) of the handling means (200) which has been introduced is secured to a first end (320) of the securing unit (300), wherein the first end (320) of the securing unit (300) is secured to the side of the rotor blade (100) opposite the opening (190).

2. Rotor blade according to claim 1, wherein
three openings (190) are provided in the rotor blade outer shell (180) around the region of the centre of gravity (600) of the rotor blade.

3. Rotor blade according to claim 1 or claim 2, wherein
the handling means (200) constitute soft slings produced from GRP or CFRP.

4. Rotor blade according to any one of claims 1 to 3, wherein the opening (190) can be closed from the inner side after completed assembly of the rotor blade.

5. Rotor blade according to any one of claims 1 to 4, wherein the rotor blade outer shell (180) in the region of the at least one opening (190) and the securing units (300) is constructed to be so large that a man can crawl through.

6. Rotor blade according to any one of claims 1 to 5, wherein the securing unit (300) has a first and second end, wherein there is provided at the first and the second end a respective reinforcement plate (310) which is adhesively bonded from the inner side or to the pressure side or the intake side.

7. Rotor blade according to claim 6, wherein
the securing unit (300) is configured in a symmetrical manner and has a first hole and a second hole (320, 340) which are suitable for receiving a pin (400) for securing one end of the handling means.

8. Method for assembling wind turbine rotor blades, wherein each rotor blade has a rotor blade outer shell (180) having at least one opening (190) for receiving handling means (200) for assembly or disassembly of the rotor blade (100), wherein at least one securing unit (300) is provided for securing the handling means (200) which is introduced through the at least one opening, wherein the securing unit is provided inside the rotor blade outer shell, having the steps of:
securing at least a first end (220) of a first handling means (200) to a first end (320) of a securing unit (300) of a wind turbine rotor blade (100) at the side of the wind turbine rotor blade (100) opposite the opening (190), wherein the first handling means (200) is introduced through the opening (190),
lifting the rotor blade by means of the first handling means (200) and a first crane,
assembling the rotor blade (100) on a first rotor blade connection in a pod of a wind turbine,
lowering the first assembled rotor blade (100) by means of the first crane and the first secured handling means (200),
retaining the rotor blade (100) in the lowered position by means of the first handling means (200) and the first crane,
securing second handling means to a securing unit (300) of a second wind turbine rotor blade (100), wherein the second handling means (200) is introduced through the opening (190),
lifting the second rotor blade (100) by means of the second handling means (200) and a second crane,
assembling the second rotor blade (100) on a second rotor blade connection on a pod of the wind turbine,
wherein the first rotor blade is retained by the first handling means and the first crane until the second rotor blade is assembled.

## Revendications

1. Pale de rotor d'éolienne (100), avec
une racine de pale de rotor (110), une pointe de pale de rotor (120), un bord d'attaque de pale de rotor (160) et un bord de fuite de pale de rotor (170) ainsi qu'un côté pression (140) et un côté aspiration (130),
une enveloppe extérieure de pale de rotor (180) avec au moins une ouverture (190) dans le côté pression et/ou aspiration servant à recevoir des moyens de manutention (200) servant au montage ou au démontage de la pale de rotor (100), et
au moins une unité de fixation (300) servant à fixer les moyens de manutention (200) introduits par l'au moins une ouverture, dans laquelle l'unité de fixation (300) est disposée dans l'espace intérieur (150) de l'enveloppe extérieure de pale de rotor (100) entre le côté pression (140) et le côté aspiration (130),
dans laquelle une première extrémité (220) du moyen de manutention (200) introduit est fixée au niveau d'une première extrémité (320) de l'unité de fixation (300), dans laquelle la première extrémité (320) de l'unité de fixation (300) est fixée au niveau du côté, faisant face à l'ouverture (190), de la pale de rotor (100).

2. Pale de rotor selon la revendication 1, dans laquelle
trois ouvertures (190) sont prévues dans l'enveloppe extérieure de pale de rotor (180) autour de la zone du centre de gravité (600) de la pale de rotor.

3. Pale de rotor selon la revendication 1 ou 2, dans laquelle
les moyens de manutention (200) représentent des élingues souples composées de plastique renforcé de fibres de verre ou de plastique renforcé de fibres de carbone.

4. Pale de rotor selon l'une quelconque des revendications 1 à 3, dans laquelle
l'ouverture (190) peut être fermée depuis l'intérieur une fois le montage de la pale de rotor réussi.

5. Pale de rotor selon l'une quelconque des revendications 1 à 4, dans laquelle
l'enveloppe extérieure de pale de rotor (180) est configurée de manière si grande dans la zone de l'au moins une ouverture (190) et des unités de fixation (300) qu'un homme peut s'y glisser au travers.

6. Pale de rotor selon l'une quelconque des revendications 1 à 5, dans laquelle
l'unité de fixation (300) présente une première et une deuxième extrémité, dans laquelle respectivement une plaque de renforcement (310) est prévue au niveau de la première extrémité et au niveau de la deuxième extrémité, laquelle est collée depuis l'intérieur ou au niveau du côté pression ou du côté aspiration.

7. Pale de rotor selon la revendication 6, dans laquelle
l'unité de fixation (300) est configurée de manière symétrique et présente un premier et un deuxième trou (320, 340), qui sont appropriés pour recevoir un boulon (400) servant à la fixation d'une extrémité des moyens de manutention.

8. Procédé servant au montage de pales de rotor d'éoliennes, dans lequel chaque pale de rotor présente une enveloppe extérieure de pale de rotor (180) avec au moins une ouverture (190) servant à recevoir des moyens de manutention (200) servant au montage ou au démontage de la pale de rotor (100), dans lequel au moins une unité de fixation (300) est prévue afin de fixer les moyens de manutention (200) introduits à travers l'au moins une ouverture, dans lequel l'unité de fixation est prévue dans l'espace intérieur de l'enveloppe extérieure de pale de rotor, avec les étapes consistant à :
fixer au moins une première extrémité (220) d'un premier moyen de manutention (200) au niveau d'une première extrémité (320) d'une unité de fixation (300) d'une pale de rotor d'éoliennes (100) au niveau du côté, faisant face à l'ouverture (190), de la pale de rotor d'éoliennes (100), dans lequel le premier moyen de manutention (200) est introduit à travers l'ouverture (190),
relever la pale de rotor au moyen du premier moyen de manutention (200) et d'une première grue,
monter la pale de rotor (100) au niveau d'un premier raccord de pale de rotor dans une nacelle d'une éolienne,
abaisser la première pale de rotor (100) montée au moyen de la première grue et des premiers moyens de manutention (200) fixés,
maintenir la pale de rotor (100) dans la position abaissée au moyen du premier moyen de manutention (200) et de la première grue,
fixer des deuxièmes moyens de manutention au niveau d'une unité de fixation (300) d'une deuxième pale de rotor d'éoliennes (100), dans lequel le deuxième moyen de manutention (200) est introduit par l'ouverture (190),
relever la deuxième pale de rotor (100) au moyen des deuxièmes moyens de manutention (200) et d'une deuxième grue,
monter la deuxième pale de rotor (100) au niveau d'un deuxième raccord de pale de rotor au niveau d'une nacelle de l'éolienne,
dans lequel la première pale de rotor est maintenue par les premiers moyens de manutention et par la première grue jusqu'au montage de la deuxième pale de rotor.
